Europäisches Patentamt

(19) European Patent Office

Office européen des brevets

(11) **EP 0 819 601 B1**

(12) **FASCICULE DE BREVET EUROPEEN**

(45) Date de publication et mention
de la délivrance du brevet:
**08.09.2004   Bulletin 2004/37**

(51) Int Cl.⁷: **B64C 21/10**

(21) Numéro de dépôt: **97401426.8**

(22) Date de dépôt: **20.06.1997**

(54) **Surface modifiée pour reduire les turbulences d'un fluide**

Hinsichtlich Fluidturbulenzen modifizierte Oberfläche

Surface modified with respect to reducing the turbulence in a fluid

(84) Etats contractants désignés:
**DE FR GB IT NL**

(30) Priorité:  **15.07.1996  FR 9608914**

(43) Date de publication de la demande:
**21.01.1998   Bulletin 1998/04**

(73) Titulaire: **Institut Français du Pétrole
92852 Rueil-Malmaison Cedex (FR)**

(72) Inventeurs:
• **Falcimaigne, Jean
92270 Bois Colombes (FR)**
• **Palermo, Thierry
92250 La Garenne Colombes (FR)**
• **Rojey, Alexandre
92500 Rueil Malmaison (FR)**

(56) Documents cités:
**EP-A- 0 205 289        EP-A- 0 216 384
EP-A- 0 284 187        EP-A- 0 543 647
US-A- 4 650 138        US-A- 4 759 516
US-A- 5 107 626        US-A- 5 386 955**

• **MESSEN UND PRÜFEN, no. 3, 1 Mars 1990,
MÜNCHEN, DE, pages 116-117, XP000175645
HALL, TONY: "RIPPENSTRUKTUREN
VERMINDERN AERODYNAMISCHEN
WIDERSTAND SOWIE RAUSCHEN INFOLGE
STRÖMUNGEN"**
• **PATENT ABSTRACTS OF JAPAN vol. 016, no.
270 (M-1266), 17 Juin 1992 & JP 04 066392 A
(MITSUBISHI HEAVY INDUSTRIES LTD.), 2 Mars
1992,**
• **PATENT ABSTRACTS OF JAPAN vol. 013, no.
588 (M-912), 25 Décembre 1989 & JP 01 247296
A (AGENCY OF INDUSTRIAL SCIENCE &
TECHNOLOGY), 3 Octobre 1989,**

**Description**

La présente invention concerne une structure présentant une surface adaptée pour réduire les problèmes de turbulence existant à l'intérieur de la couche limite d'un fluide en mouvement par rapport à la surface.

L'invention trouve notamment, mais non exclusivement, son application dans le domaine du transport du gaz sous pression à travers une conduite. Lors de son transport, il se produit des frottements entre le gaz sous pression en écoulement et la paroi de la conduite interne, qui conduisent à des pertes de charge importantes. Les pertes de charge doivent être compensées pour assurer un transport optimum du fluide dans la conduite.

En effet, le transport du gaz sous pression représente un enjeu économique important et les gazoducs intercontinentaux de transport du gaz mettent en jeu des investissements considérables.

Le gaz transporté est dans ce cas, du gaz naturel comportant au moins 90 % de méthane.

L'invention peut aussi être employée pour le transport de fluides se présentant sous la forme d'un écoulement turbulent. Elle vise aussi le transport de gaz industriels, tels que les gaz de synthèse, l'hydrogène, l'éthylène, etc..

L'art antérieur comme par exemple, le brevet US 4759516 décrit différentes structures permettant de contrôler les phénomènes dus à l'interaction d'une couche limite d'un fluide en mouvement par rapport à une surface et notamment les phénomènes de turbulence.

Ces structures peuvent être formées par des surfaces munies de stries présentent dans la région de turbulence. L'axe des stries s'étend dans la direction de l'écoulement du fluide. Le rôle de ces stries, est de réduire les phénomènes de turbulence existant à l'intérieur de la couche limite du fluide en mouvement et, en diminuant les frottements entre la surface et le fluide, de minimiser les pertes de charge.

Les expériences au vu de l'art antérieur annoncent des diminutions de perte de charge pouvant aller, par exemple, jusqu'à 7%.

Les stries, ou moyens de réduction des pertes de charge, peuvent prendre différentes géométries, et leur nombre peut être choisi en fonction des conditions de transport, et/ou de la nature du fluide afin d'obtenir le minimum de pertes de charge.

Elles présentent, par exemple, un profil rectangulaire de type gorge, ou encore en "V".

L'art antérieur cite aussi l'utilisation avantageuse de stries ayant une forme cylindrique, qui permettraient d'obtenir des effets d'ancrage du fluide, évitant ainsi l'amplification du phénomène de turbulence dans la couche limite du fluide en écoulement.

Par l'expression "couche limite", on désigne une zone de fluide en écoulement dans une conduite par exemple voisine de la paroi ou de la surface interne de cette conduite, dans laquelle le gradient de vitesse est le plus élevé.

Une autre architecture de structure qui est envisagée dans l'art antérieur, consiste à associer des rainures longitudinales (dans le sens de l'écoulement du fluide), avec un dispositif disposé et suspendu par rapport à ces rainures, ce dernier ayant pour rôle de "briser" les tourbillons de grande amplitude, alors que les rainures longitudinales vont agir sur les tourbillons de faible amplitude. Une telle association est toutefois complexe et encombrante.

Il a été également envisagé d'utiliser des géométries plus complexes qu'une simple succession de stries identiques.

Par exemple, le brevet US-5.386.955 décrit un agencement spécifique de rainures ou de stries semblables. Ce document enseigne de disposer des rainures de plusieurs tailles, selon un agencement et une séquence choisies, pour inhiber les tourbillons d'échelles différentes à l'intérieur de la couche limite du fluide.

Toutefois, un tel dispositif en alternant des ailettes de hauteur différentes, ne permet pas de bénéficier localement d'une addition des effets (atténuation de la turbulence) qui en résultent.

La présente invention offre l'avantage de bénéficier simultanément et en tout point d'un effet d'inhibition de la turbulence à au moins deux échelles différentes, notamment en superposant des profils géométriques correspondant à des échelles différentes. Dans la présente invention, on utilise un profil géométrique à grande échelle qui forme la ligne de base d'un profil géométrique à plus petite échelle.

La présente invention concerne une conduite pour transporter un fluide, la paroi interne de la conduite comportant des rainures permettant d'inhiber les phénomènes de turbulence d'un fluide en écoulement dans la conduite, les rainures s'étendant sensiblement longitudinalement dans le sens du mouvement dudit fluide. Les rainures forment au moins un premier système d'ondes d'amplitude $a_1$, et au moins un deuxième système d'ondes d'amplitude $a_2$, le deuxième système d'ondes étant disposé de manière à être superposé au premier système d'ondes, le premier système d'ondes permettant au moins d'inhiber les turbulences de forte amplitude et le deuxième système d'ondes permettant d'inhiber au moins les turbulences de faible amplitude.

Le profil géométrique délimitant le premiér système d'ondes forme de préférence la ligne de base du profil géométrique délimitant le deuxième système d'onde.

L'amplitude $a_1$ est supérieure à l'amplitude $a_2$, l'amplitude $a_1$ étant prise par rapport à la surface de base du premier système d'ondes et l'amplitude $a_2$ par rapport à la surface de base du deuxième système d'ondes.

Le premier système d'ondes présente un profil sensiblement de forme polygonale comprenant n côtés et r sommets. Un segment de droite di délimité par deux sommets consécutifs, fait par rapport au précédent et/ou au suivant segment de droite (di-1, di+1), d'un angle α. La valeur de cet angle α est positive, c'est-à-dire que la valeur de l'angle α comptée à l'intérieur du polygone est inférieure à 180°.

De préférence, la somme de tous les angles inscrits pour la totalité ou la majorité de la longueur de la forme polygonale est sensiblement égale à $\Pi$ (n-2).

Avantageusement, le nombre de cotés est supérieur à 25, ou le nombre r de sommets vérifie la condition suivante:

$$\frac{1}{6}\left(\frac{2\pi}{r}\right)^2 < 0,01$$

La présente invention trouve avantageusement son application pour former la paroi interne d'une conduite par exemple ayant une géométrie circulaire utilisée pour le transport d'un gaz naturel sous pression, dans des conditions par exemple précitées au début de la description. La paroi interne présentant les caractéristiques spécifiques de la présente invention s'étend sur au moins une partie de la longueur et la circonférence de la conduite de transport. Elle peut être disposée par tronçons à l'intérieur de la conduite, les tronçons étant séparés par des intervalles pré définis, par exemple.

Elle peut aussi s'étendre sur la presque totalité ou la totalité de la longueur de la conduite de transport.

La conduite de transport peut comporter un revêtement interne présentant les caractéristiques de la structure précitées, dont les rainures forment les premiers et les seconds systèmes d'ondes qui sont réalisés, par exemple mécaniquement et/ou chimiquement de manière à obtenir les caractéristiques géométriques nécessaires pour inhiber les turbulences.

La conduite de transport d'un gaz comportant au moins une structure ayant les caractéristiques prémentionnées, est de préférence réalisée en matériau composite.

La présente invention peut être appliquée au transport d'un gaz, par exemple un gaz en écoulement turbulent, d'un puits de production vers un endroit de traitement, par exemple.

On peut détendre le gaz en sortie du puits jusqu'à une valeur de pression au moins égale à 5 MPa,

Puis, on peut envoyer le gaz dans une conduite ayant une section de valeur choisie pour que la vitesse de passage du gaz transporté soit, par exemple, supérieure à 10 m/s, la conduite comportant, par exemple sur au moins une partie de sa longueur, une structure présentant les caractéristiques précitées, afin d'inhiber les turbulences dans la couche limite voisine de la structure.

Du fait de la superposition des moyens de réduction de la turbulence à différentes échelles, on observe une addition des effets de réduction de la turbulence.

Ainsi, en superposant deux profils géométriques qui, lorsqu'ils sont utilisés isolément, conduisent chacun à une réduction de la perte de charge de 5 à 8%, on peut obtenir, grâce à la disposition de superposition, une réduction de la perte de charge de 10 à 15 %.

D'autres avantages et caractéristiques de la présente invention apparaîtront mieux à la lecture de la description donnée ci-après à titre d'exemples de réalisation, dans le cadre d'applications nullement limitatives, au transport d'un gaz naturel dans une conduite, en se référant aux dessins annexés où :

- la figure 1 schématise le profil de vitesse du gaz en écoulement dans une conduite,
- la figure 2 décrit un exemple de géométrie de rainures ou stries simples selon l'art antérieur,
- les figures 3 à 5 représentent des exemples de réalisation de structures selon l'invention comportant une superposition de plusieurs moyens permettant d'inhiber des mouvements tourbillonnaires d'amplitudes différentes,
- la figure 6 montre selon une coupe transversale un exemple d'utilisation d'une structure selon l'invention à l'intérieur d'une conduite,
- les figures 7 et 8 schématisent des variantes de réalisation du deuxième système, et
- la figure 9 montre une variante de réalisation dans laquelle on superpose plusieurs films pour obtenir la structure selon l'invention.

De manière à mieux faire comprendre les caractéristiques essentielles de la structure selon l'invention, la description donnée ci-après à titre illustratif et nullement limitatif concerne la réalisation d'une conduite utilisée pour transporter un gaz naturel sous pression issu d'un puits de production vers un lieu de traitement, par exemple.

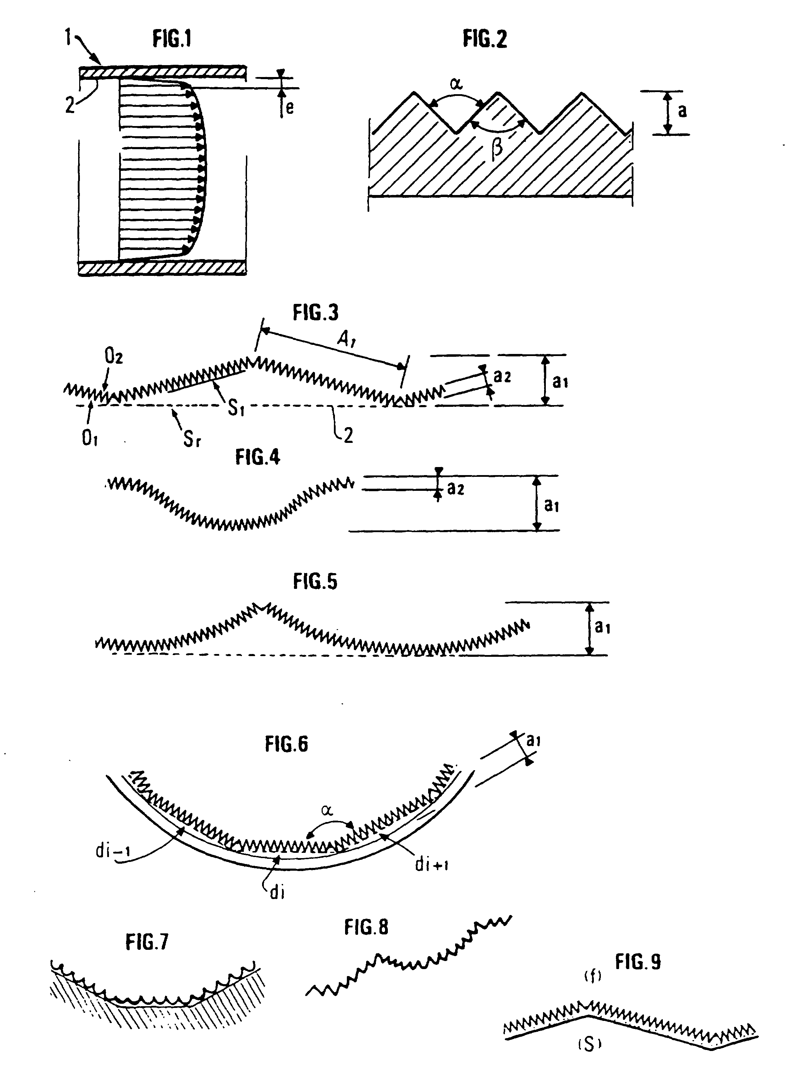

La figure 1 rappelle la forme générale du profil de vitesse d'un fluide en écoulement dans une conduite 1, l'écoulement du fluide étant un écoulement dit "turbulent".

Le cisaillement pour les écoulements de type turbulent, est très important dans une couche d'épaisseur "e" relativement réduite et voisine de la paroi interne 2 de la conduite 1, le champ de vitesse au centre du fluide en écoulement étant sensiblement uniforme, contrairement au champ de vitesse observé dans la couche limite d'épaisseur "e".

Pour limiter les pertes de charge résultant de l'interaction entre le fluide et la paroi interne 2 de la conduite, l'idée de l'invention est de réduire les effets de dissipation visqueuse liés à la turbulence, au voisinage immédiat de la paroi, en utilisant une structure présentant les caractéristiques spécifiques décrites ci-après.

La figure 2 schématise selon une section transversale perpendiculaire à leur direction générale, un exemple de géométrie de rainures ou stries de forme simple décrites dans l'art antérieur.

Les structures ou revêtements striés décrits sur cette figure, forment un système d'ondes longitudinales, qui s'étendent dans la direction de l'écoulement du fluide, et qui permettent de réduire les effets de dissipation visqueuse liées à la présence des mouvements de tourbillons à faible échelle.

Une onde 3 représentée sur la figure 2 est caractérisée par une succession de parties concaves et de parties convexes, délimitées par une ligne brisée. Les segments de droite joignant les sommets de cette ligne brisée forment à chaque sommet un angle $\alpha$, $\beta$ qui est tel que la somme algébrique des angles $\alpha$ formés par les deux segments de droite successifs délimitant une partie concave, comptés positivement, et des angles $\beta$ formés par les deux segments de droite délimitant une partie convexe, comptés négativement, est nulle ou sensiblement égale à 0. Chaque segment de droite forme ainsi avec le précèdent un angle alternativement positif et négatif.

L'amplitude "a" des ondes 3 est dans ce cas, par exemple, de l'ordre de quelques dixièmes de millimètres.

Une telle géométrie d'onde permet d'atténuer ou d'inhiber une turbulence ayant une échelle d'amplitude sensiblement constante à l'intérieur de la couche limite du fluide. On peut ainsi amortir la turbulence à faible échelle présente au voisinage immédiat de la paroi interne. Toutefois, dans la majorité des cas, les écoulements sont caractérisés par une turbulence à plusieurs échelles, et ce système d'ondes se révèle insuffisant ou perfectible.

L'idée de la présente invention consiste donc à disposer d'une structure qui peut agir sur des turbulences présentant des niveaux d'amplitude différents. Il a été découvert que pour amortir les effets de la turbulence à différentes échelles par exemple, dans une conduite industrielle de transport de gaz naturel, de meilleurs résultats sont obtenus en superposant au moins deux géométries qui vont permettre d'amortir les effets de turbulence ayant au moins deux niveaux d'amplitude (au moins deux échelles différentes).

Les figures 3 à 5 schematisent selon une section transversale différentes formes de structure que peut prendre la paroi d'une conduite La surface de la paroi peut ainsi comporter au moins deux séries de moyens, superposés l'un par rapport à l'autre, qui ont chacun pour fonction d'inhiber au moins les tourbillons ou les turbulences d'échelle différentes se produisant dans une épaisseur d'un gaz en écoulement par rapport à la paroi et au voisinage de la surface ou paroi interne de la structure.

Dans les exemples qui sont décrits aux figures 3 à 5, on définit comme un système d'ondes, un ensemble formé par une série de moyens inhibiteurs de turbulence pouvant se présenter sous la forme d'ondes.

On va par exemple superposer deux systèmes d'ondes $0_1$, $0_2$ de manière à atténuer les turbulences ayant deux amplitudes différentes, les caractéristiques géométriques de ces systèmes étant définies par exemple par rapport à des surfaces de référence de la façon suivante :

- le premier système d'ondes $0_1$ possède une amplitude $a_1$ déterminée par rapport à une surface de référence Sr qui peut être celle de la paroi de la conduite, le système d'ondes détermine ainsi une surface S1 définie par exemple par une ligne fictive le bas des ondes,
- le second système d'ondes $0_2$ présente une amplitude a2 qui peut être définie par rapport à la surface S1.

Dans cet exemple de réalisation, le premier système d'ondes forme la base du second système d'ondes.

Le premier système d'ondes $0_1$ d'amplitude $a_1$, a pour fonction principale d'inhiber au moins les mouvements tourbillonnaires de forte amplitude, alors que le deuxième système d'ondes $0_2$ d'amplitude $a_2$ a pour fonction d'inhiber au moins les mouvements tourbillonnaires de faible amplitude, au voisinage de la paroi, les expressions mouvements tourbillonnaires et turbulence désignant des phénomènes identiques.

De préférence, on vérifie la relation $a_1 > a_2$.

Du fait de la superposition des deux systèmes d'ondes $0_1$ et $0_2$ en tout point, les effets d'inhibition obtenus par chacun de ces systèmes d'ondes, si ils étaient pris individuellement, se cumulent au moins en partie.

Le rapport entre les amplitudes des deux systèmes d'ondes $a_1/a_2$ est, par exemple, de l'ordre de 10. La valeur de l'amplitude $a_1$ est par exemple de l'ordre du millimètre, environ 1 mm, alors que la valeur de $a_2$ est choisie sensiblement égale à 1/10 ème de mm.

Le profil du premier système d'ondes $0_1$ décrit à la figure 3, se présente, par exemple, sous la forme d'une ligne brisée comprenant une succession de parties sensiblement rectilignes $A_1$, pour inhiber les turbulences de forte amplitude. Sur ces parties rectilignes $A_1$ vient se superposer le second système d'ondes $0_2$ dont la fonction est d'inhiber les turbulences de faible amplitude.

La figure 4 décrit une structure présentant un premier système d'ondes $0_1$ de forme sinusoïdale formant au moins en partie la paroi d'une conduite, la sinusoïde étant sensiblement perpendiculaire à la direction d'écoulement du fluide. Sur ce système d'ondes qui inhibe les mouvements tourbillonnaires de forte amplitude, vient se superposer le second système d'ondes $0_2$ inhibant les turbulences de faible amplitude.

Les amplitudes $a_1$ et $a_2$ peuvent prendre des valeurs qui sont sensiblement identiques à celles décrites en relation avec la figure 3.

Dans l'exemple donné à la figure 5, la structure selon l'invention comporte un premier système d'ondes 01 formé par une suite d'éléments en saillie dont l'angle au sommet est relativement réduit.

Une telle structure présente l'avantage de réduire la diminution de la section ouverte à l'écoulement, par rapport aux exemples donnés aux figures 3 et 4.

Avantageusement, dans les exemples de réalisation des figures 3 à 5, le profil de plus grande amplitude, correspondant au premier système d'ondes, est inscrit entre deux surfaces $S_1$, $S_2$ dont la distance correspond sensiblement à l'amplitude $a_1$.

Dans le cas d'un écoulement de gaz naturel sous pression dans une conduite, il importe peu que la perte de section ouverte à l'écoulement soit relativement faible par rapport à la section totale de la conduite. Le profil de plus grande amplitude est choisi pour que la perte de section soit de préférence limitée à 1% de cette section totale.

Dans le cas de la structure représentée à la figure 3, la valeur de l'amplitude $a_1$ est de préférence inférieure à 0,005 fois la valeur du diamètre interne D de la conduite.

Ainsi, pour une conduite de 36 pouces de diamètre interne, la valeur de la plus grande amplitude de l'onde $a_1$ est inférieure à 4,6 mm.

La géométrie de structure représentée à la figure 5 présente comme avantage de réaliser un profil de plus grande amplitude avec une perte de section moindre. En effet, la forme géométrique spécifique du premier système d'ondes tel qu'il est représenté sur cette figure génère une perte de section ouverte à l'écoulement inférieure.

Sur les figures 3, 4 et 5, le second système d'ondes $O_2$ est formé par une ligne brisée comportant plusieurs segments de droites successifs. Il est bien entendu que sans sortir de l'invention, d'autres formes de géométrie peuvent être envisagées pour le second système d'ondes.

Il peut ainsi avoir un profil sinusoïdal ou encore être formé d'une suite d'éléments en saillie disposés périodiquement de géométrie analogue à la géométrie du premier système d'ondes représenté sur la figure 5.

La figure 6 décrit, selon une section transversale d'une conduite circulaire, une structure qui est particulièrement bien adaptée pour inhiber les effets d'une turbulence présentant plusieurs amplitudes différentes.

La structure telle que schématisée sur la figure 6 présente deux systèmes d'ondes permettant d'amortir au moins deux échelles différentes de turbulence. Elle est formée d'un premier système d'ondes présentant un profil de type polygonal (PI) qui s'inscrit entre deux surfaces $S_1$, $S_2$ distantes d'une amplitude $a_1$ par exemple. Sur ce premier système d'ondes PI se superpose un second système d'ondes $O_2$ d'amplitude $a_2$ ayant, par exemple une géométrie semblable à celle des systèmes d'ondes décrits aux figures 3 à 5. L'amplitude $a_2$ est inférieure à celle de l'amplitude $a_1$.

Le profil polygonal PI est composé de plusieurs côtés, ou segments de droite di. Les segments de droite di sont reliés entre eux, deux segments de droite, par exemple (di-1, di), ou (di, di+1), formant entre eux un angle ayant de préférence une valeur positive, définissant ainsi un sommet r. La somme des angles $\alpha$

exprimée en radians est sensiblement égale à $\Pi$ (n-2). Le système d'ondes décrit à la figure 2 présente au contraire des angles alternativement positif et négatif.

Une structure possédant un tel profil polygonal permet d'amortir la turbulence dont l'amplitude est sensiblement égale à $a_1$ qui correspond à le distance entre la surface $S_1$ inscrite à l'intérieur du polygone et la surface passant par les sommets r, le second système $O_2$ va inhiber les turbulences d'amplitude sensiblement voisine de $a_2$.

La structure décrite à la figure 6 offre de plus l'avantage de conserver une perte de section ouverte à l'écoulement relativement faible, et, de préférence inférieure à 1% de la section totale circulaire de la conduite.

Pour cela, le nombre n de côtés du profil polygonal PI est de préférence choisi suffisamment grand et vérifie les conditions suivantes :

$$\frac{1}{6}\left(\frac{2\Pi}{r}\right)^2 < 0,01$$

c'est-à-dire n > 25 et

$$a_1 \cong \frac{D}{2}\left(\frac{\Pi^2}{n^2}\right)$$

$$a_1 = 0,07D$$

Une telle structure permet avantageusement d'inhiber une gamme de turbulences pouvant prendre différentes formes, notamment des turbulences comportant plusieurs amplitudes. La valeur de $a_1$ peut être choisie plus grande que celle du système représenté sur la figure 3, tout en conservant une structure de forme simple, de façon à inhiber des turbulences d'amplitudes plus importantes.

Le mode de réalisation de la structure décrit à la figure 6 montre un second système d'ondes $O_2$ d'amplitude $a_2$ ayant une forme sensiblement analogue à celle du système d'onde de la figure 2.

Sans sortir du cadre de l'invention, il est possible de superposer au premier système d'ondes de type polygonal (PI) un second système d'ondes de géométrie différente, par exemple formé par une suite périodique d'éléments en saillie de géométrie par exemple analogue à la géométrie du profil d'ondes $O_1$ représenté sur la figure 5.

La figure 7 décrit une structure présentant cette caractéristique.

Les phénomènes de turbulence quelque soit leur amplitude et leur forme étant liés du fait de la viscosité du fluide, il est possible d'envisager des superpositions et des combinaisons de systèmes d'ondes qui vont avoir un effet de synergie permettant d'optimiser l'inhibition des turbulences.

La figure 8 décrit un mode de réalisation pour une structure comportant un premier système d'ondes de type polygonal sur lequel vient se superposer un second système d'ondes présentant une combinaison de deux géométries dondes. Les ondes du second système peuvent avoir des amplitudes différentes. Dans tous les cas la plus grande des amplitudes du second système d'ondes est inférieure à l'amplitude du premier système d'ondes.

La structure selon l'invention, décrite aux figures précédentes 3 à 7, est par exemple utilisée pour former une partie d'une conduite de transport d'un gaz naturel sous pression issu d'un puits de production et envoyé vers un lieu de traitement par exemple.

Le gaz naturel est détendu à la sortie du puits jusqu'à une valeur de pression au moins égale à 5 MPa puis envoyé à travers une conduite comportant par exemple une paroi interne au moins dans la partie reliée à la sortie du puits de production. La section de la conduite de production est choisie de préférence pour obtenir une vitesse de passage du gaz ou une vitesse moyenne d'écoulement du gaz, c'est-à-dire le rapport du débit volumique de gaz sur la section de passage, supérieure à 10 m/s

On optimise ainsi l'effet d'inhibition obtenu en superposant les différents systèmes d'ondes.

Une application particulièrement importante d'une structure comportant les caractéristiques de l'invention concerne, comme indiqué précédemment, le transport d'un gaz naturel sous pression, comprenant au moins 90 % de méthane. La valeur de la pression du gaz est de préférence supérieure à 50 bars et la vitesse moyenne d'écoulement respecte de préférence la valeur citée ci-dessus.

De telles conditions d'écoulement et la présence de ce type de structure sont de préférence respectées pour transporter des gaz industriels sous pression, par exemple pour convoyer un gaz de synthèse formé d'un mélange d'oxyde de carbone et d'hydrogène ou encore pour transporter de l'hydrogène, de l'éthylène.

La conduite de transport qui comprend les caractéristiques structurelles selon l'invention, peut être une conduite métallique, par exemple en acier.

Les systèmes d'ondes sont par exemple réalisés en rainurant mécaniquement la surface interne de la conduite.

Une autre manière de procéder consiste à réaliser ces rainures par voie chimique.

On peut aussi concevoir un revêtement interne présentant les caractéristiques précédemment décrites, et le disposer à l'intérieur d'une conduite. Un tel mode de réalisation permet notamment de limiter la rugosité de surface et de contribuer ainsi à la réduction des pertes de charges.

Le revêtement interne peut être réalisé en disposant sur la surface interne d'une conduite de transport un film, par exemple un film en matériau polymère dont une des faces comporte un système d'ondes longitudinales, c'est-à-dire un système d'ondes ayant un axe principal sensiblement parallèle à la direction d'écoulement.

Ces ondes peuvent être réalisées par exemple par rainure mécanique, par gravure chimique ou encore par moulage.

Le revêtement interne peut aussi être réalisé en déposant un enduit, et en générant de manière mécanique les rainures ou encore par gravure chimique dans l'enduit. L'enduit peut être par exemple à base de peinture époxy, uréthanne ou époxy-uréthanne.

Le revêtement interne peut aussi se présenter sous la forme de plusieurs couches superposées ou multi-couches, par exemple sous forme de bi-couches ou tri-couches. On peut aussi superposer un ou plusieurs films polymère et un revêtement à base d'enduit.

Pour superposer plusieurs systèmes d'ondes, il encore est possible de superposer sur une couche comportant une structure de surface formant un système d'ondes de relativement grande amplitude, un film comportant une structure de surface formant un système d'ondes de plus petite amplitude.

Un exemple de réalisation d'une telle structure est représentée à la figure 9. Un film (f) comportant une structure de surface formant un système d'ondes d'amplitude $a_2$ est déposé sur une surface support (S) comportant une structure de surface formant un système d'ondes d'amplitude $a_1$.

Il est également possible de superposer plusieurs films $(f_1)$, $(f_2)$, .... comportant chacun une structure de surface formant un système d'ondes d'amplitude décroissante.

Pour réaliser un système d'ondes à au moins deux échelles différentes, il est possible de combiner des méthodes de réalisation différentes. Par exemple, en réalisant la structure de surface qui forme un système d'ondes ayant une amplitude relativement importante, par rainurage mécanique et la structure de plus faible amplitude par gravure chimique, par exemple.

La conduite peut être également une conduite flexible réalisée en matériau composite dont la surface interne présente un système d'ondes faisant l'objet de la présente invention.

Les ondes ont une direction générale longitudinale, parallèle à l'axe de l'écoulement du gaz et de préférence, elles sont continues. Toutefois, elles peuvent s'écarter légèrement de cette direction, ne pas être strictement rectilignes, elles peuvent aussi être discontinues et interrompues sur une partie de leur longueur sans sortir du cadre de l'invention.

Il est bien entendu que sans sortir du cadre de l'invention, les couches peuvent être constituées de matériau de nature différentes et les techniques mécaniques et chimiques peuvent être utilisées pour former les rainures d'une même partie d'une conduite.

**Revendications**

1. Conduite pour transporter un fluide, la paroi interne de la conduite comportant des rainures permettant d'inhiber les phénomènes de turbulence d'un fluide en écoulement dans la conduite, les rainures s'étendant sensiblement longitudinalement dans le sens du mouvement dudit fluide, les rainures forment au moins un premier système d'ondes (O1) d'amplitude a1 et au moins un deuxième système d'ondes (O2) d'amplitude a2, ledit deuxième système d'ondes (O2) étant superposé audit premier système d'ondes (O1), ledit premier système d'ondes (O1) permettant au moins d'inhiber les turbulences de forte amplitude et ledit deuxième système d'ondes (O2) permettant d'inhiber au moins les turbulences de faible amplitude, l'amplitude a1 du premier système d'ondes (O1) étant supérieure à l'amplitude a2 du deuxième système d'ondes (O2), l'amplitude a1 étant prise par rapport à la surface de base du premier système d'ondes et l'amplitude a2 par rapport à la surface de base du deuxième système d'ondes, **caractérisée en ce que** le premier système d'ondes présente un profil en forme de polygone comprenant n côtés et r sommets, un segment de droite (di), délimité par deux sommets consécutifs, faisant par rapport au précédent et/ou au suivant segment de droite (di-1, di+1), un angle $\alpha$ à l'intérieur du polygone, la valeur dudit angle $\alpha$ étant inférieure à 180°.

2. Conduite selon la revendication 1, dans laquelle la somme de tous les angles $\alpha$, inscrits pour l'ensemble de la forme polygonale est sensiblement égale à $\pi$(n-2).

3. Conduite selon l'une des revendications 1 et 2, dans laquelle le nombre n de côtés est supérieur à 25.

4. Conduite selon l'une des revendications 1 à 3, dans laquelle le nombre r de sommets vérifie la condition suivante :

$$\frac{1}{6}\left(\frac{2\pi}{r}\right)^2 < 0,01$$

5. Conduite selon l'une des revendications 1 à 4, dans laquelle les rainures sont formées mécaniquement et/ou chimiquement dans un revêtement interne.

6. Conduite selon l'une des revendications 1 à 5, réalisée en matériau composite.

7. Conduite selon l'une des revendications 1 à 6, dans laquelle le fluide est un gaz naturel sous pression au moins égale à 5 MPa et s'écoulant au moins à 10 m/s.

**Patentansprüche**

1. Rohrleitung zum Befördern eines Fluids, wobei die Innenwand der Rohrleitung Rillen umfaßt, welche es ermöglichen, Turbolenzerscheinungen eines in der Rohrleitung strömenden Fluids zu verhindern, wobei die Rillen sich im wesentlichen longitudinal in der Bewegungsrichtung des besagten Fluids erstrecken, die Rillen bilden mindestens ein erstes Wellensystem (O1) mit der Amplitude a1 und mindestens ein zweites Wellensystem (O2) mit der Amplitude a2, wobei das besagte zweite Wellensystem (O2) dem besagten ersten Wellensystem (O1) überlagert ist, wobei das besagte erste Wellensystem (O1) es mindestens ermöglicht, die Turbulenzen mit großer Amplitude zu verhindern und wobei das besagte zweite Wellensystem (O2) es mindestens ermöglicht, die Turbulenzen mit kleiner Amplitude zu verhindern, wobei die Amplitude a1 des ersten Wellensystems (O1) größer ist als die Amplitude a2 des zweiten Wellensystems (O2), wobei die Amplitude a1 relativ zu der Grundfläche des ersten Wellensystems (O1) gemessen wird und die Amplitude a2 relativ zu der Grundfläche des zweiten Wellensystems (O2) genommen wird, **dadurch gekennzeichnet, daß** das erste Wellensystem ein Profil in Form eines Vielecks aufweist, umfassend n Seiten und r Spitzen, einen durch zwei aufeinander folgende Spitzen begrenzten geraden Abschnitt (di), welcher im Verhältnis zu dem vorhergehenden und/oder dem folgenden geraden Abschnitt (di-1, di+1) einen Winkel alpha im Innern des Vielecks bildet, wobei der Wert des besagten Winkels alpha unterhalb von 180° liegt.

2. Rohrleitung nach Anspruch 1, in welcher die für die Gesamtheit der vieleckigen Form gebildete Summe aller Winkel alpha im wesentlichen gleich pi(n-2) ist.

3. Rohrleitung nach einem der Ansprüche 1 und 2, in welcher die Anzahl n der Seiten oberhalb von 25 liegt.

4. Rohrleitung nach einem der Ansprüche 1 bis 3, in welcher die Anzahl r der Spitzen die folgende Bedingung erfüllt: $1/6 * (2pi/r)^2 < 0,01$

5. Rohrleitung nach einem der Ansprüche 1 bis 4, in welcher die Rillen mechanisch oder chemisch in einer internen Verkleidung ausgebildet sind.

6. Rohrleitung nach einem der Ansprüche 1 bis 5, ausgeführt in Verbundwerkstoff.

7. Rohrleitung nach einem der Ansprüche 1 bis 6, in welcher das Fluid ein natürliches Gas ist, welches unter einem Druck von mindestens gleich 5 MPa steht und mit mindestens 10 m/s strömt.

**Claims**

1.  Pipe for transporting a fluid, the internal wall of the pipe having grooves making it possible to inhibit the phenomena of turbulence of a fluid flowing in the pipe, the grooves extending substantially longitudinally in the direction of movement of said fluid, the grooves forming at least a first system of waves (O1) of amplitude a1 and at least a second system of waves (O2) of amplitude a2, said second system of waves (O2) being superimposed on said first system of waves (O1), said first system of waves (O1) making it possible at least to inhibit the turbulence of high amplitude and said second system of waves (O2) making it possible at least to inhibit the turbulence of low amplitude, the amplitude a1 of the first system of waves (O1) being greater than the amplitude (a2) of the second system of waves (O2), the amplitude a1 being taken in relation to the base surface of the first system of waves and the amplitude a2 in relation to the base surface of the second system of waves, *characterised in that* the first system of waves presents a profile in the form of a polygon comprising n sides and r vertices, a straight line segment (di), delimited by two consecutive vertices, making an angle α inside the polygon in relation to the previous and/or the following straight line segment (di - 1, di + 1), the value of said angle α being less than 180°.

2.  Pipe according to claim 1, in which the sum of all the angles α formed for the entirety of the polygonal shape is substantially equal to π(*n* - 2).

3.  Pipe according to one of claims 1 and 2, in which the number n of sides is greater than 25.

4.  Pipe according to one of claims 1 to 3, in which the number r of vertices verifies the following condition:

$$\frac{1}{6}\left(\frac{2\pi}{r}\right)^2 < 0.01.$$

5.  Pipe according to one of claims 1 to 4, in which the grooves are formed mechanically and/or chemically in an internal lining.

6.  Pipe according to one of claims 1 to 5, made of composite material.

7.  Pipe according to one of claims 1 to 6, in which the fluid is a natural gas at a pressure of at least 5 MPa and flowing at least at 10 m/s.

**FIG.1**

**FIG.2**

**FIG.3**

**FIG.4**

**FIG.5**

**FIG.6**

**FIG.7**

**FIG.8**

**FIG.9**